# EUROPEAN PATENT SPECIFICATION

(11) **EP 3 859 211 B1**
(45) Date of publication and mention of the grant of the patent: **24.01.2024**
(21) Application number: 20315012.3
(22) Date of filing: 31.01.2020
(51) Int. Cl.: F23Q 2/50, F23Q 2/16, C09D 5/26, F23Q 7/16, B41M 5/30, C09D 7/63, C09D 7/65, C08K 5/00, C08K 5/05, C08K 5/13, C08K 9/10

(54) **HANDHELD LIGHTER WITH HIGH TEMPERATURE WARNING INDICATOR**
HANDFEUERZEUG MIT HOCHTEMPERATUR-WARNANZEIGE
BRIQUET PORTATIF AVEC INDICATEUR DE TEMPÉRATURE ÉLEVÉE

(43) Date of publication of application: 04.08.2021
(73) Proprietor: Société BIC, 92110 Clichy (FR)
(72) Inventor: Bourque, Alexander, Dartmouth, B2V2L3 (CA)
(74) Representative: Peterreins Schley

(56) References cited:
- EP-A1- 2 772 523
- CN-U- 207 865 450
- JP-A- 2019 099 628
- JP-U- S6 091 954
- US-A1- 2004 188 414

## Description

### Technical Field

The present disclosure relates to a temperature warning indicator for a handheld lighter which warns the user that parts of the lighter may be too hot to touch without burning the user.

### Background of the Disclosure

Handheld lighters are widely used for igniting combustible materials such as cigarettes, candles, and many other materials. Although other types are available, the most popular handheld lighter uses a gas flame as a heat source and a metallic wind shield to steady the open gas flame. The gas flame heats the metallic shield and, depending on the length of operation, may cause the metallic shield to reach temperatures which may burn the user when directly touched.

CN 207 865 450 U relates to an ignition device comprising a temperature-sensitive color-changing mechanism, in particular a thermochromic pattern layer, with improved publicity effect.

It is the object of the present disclosure provide a simple and cost-effective means to warn the user that the metallic shield of a handheld lighter may be too hot to the touch.

### Summary of the Disclosure

In a first aspect, the present disclosure relates to a handheld lighter for igniting a combustible material. The handheld lighter comprises an ignition mechanism for generating a heat source. It comprises an actuating means for activating the ignition mechanism. It comprises a metallic shield positioned adj acent to the ignition mechanism and at a distance to the ignition mechanism such that the metallic shield is heated by the heat source when the handheld lighter is operated. It comprises a housing. The housing comprises the ignition mechanism, the actuating means and the metallic shield.

The metallic shield of the handheld lighter comprises a thermochromic coating. The thermochromic coating comprises an electron-donative organic compound (component (a)), an electron-accepting compound (component (b)), and a reaction medium which enables an electron transfer reaction between the components (a) and (b) above the melting or softening point of the reaction medium (component (c)). The electron transfer reaction is reversible. The thermochromic coating is configured to reversibly change color in response to an increase of the temperature of the metallic shield to a first temperature of about 60 °C or above. The thermochromic coating is configured to reversibly change color in response to a decrease of the temperature of the metallic shield to a second temperature which is about 0 to about 20 °C below the first temperature.

In some embodiments, the heat source of the handheld lighter may be a gas flame and the metallic shield may be a wind shield. However, it is also contemplated that the heat source may be from a different source such as a heating coil or an electric arc and other flame generation devices such as piezo, push button or pivoting lead, as well as flameless heating product and that the metallic shield serves a different purpose than shielding the gas flame from wind such as preventing or impeding direct of the heat source by the user.

In some embodiments, the thermochromic coating may comprise core-shell microcapsules. The core-shell microparticles may comprise a core component and a shell component. The core component may comprise the electron-donative organic compound (component (a)), the electron-accepting compound (component (b)), and the reaction medium for enabling a reversible electron transfer reaction between the components (a) and (b) above the melting or softening point of the reaction medium (component (c)). The shell component may comprise an organic polymer.

In some embodiments, the thermochromic coating may be configured to change from a colored state to a decolored state in response to an increase of the temperature of the metallic shield to a first temperature of about 60 °C or above.

In some embodiments, the melting or softening point of the component (c) may remain substantially unchanged after cyclic exposure of the metallic shield to 10 cycles of heating the metallic shield until the metallic shield has reached a temperature of above the melting or softening point of the component (c) followed by cooling the metallic shield to a temperature below the melting or softening point of the component (c). The aforementioned property may describe that component (c) is not having a melt memory effect.

In some embodiments, the reaction medium for enabling a reversible electron transfer reaction between the components (a) and (b) may be a waxy material, in particular a wax. The waxy material or wax may have a melting point of between about 60°C and about 95°C, specifically between about 60°C and about 85°C, and in particular between about 65°C and about 80°C.

In some embodiments, the reaction medium for enabling a reversible electron transfer reaction between the components (a) and (b) above the melting or softening point of the reaction medium (component (c)) may be selected from the group including eicosanol, docosanol, tetracosanol, hexacosanol; stearyl stearate, stearyl arachidate, stearyl behenate, arachidyl stearate, arachidyl arachidate, arachidyl behenate, behenyl stearate, behenyl arachidate, behenyl behenate, pentaerythritol tetrastearate, (dioctadecyl)-3,3'-thiodipropionate; glycerol monolaurate, glycerol monostearate, glycerol dilaurate, glycerol distearate, glycerol dibehenate, glycerol tripalmitate, glycerol tristearate, glycerol tribehenate; cyclododecanone, 4-methoxybenzophenone, 11-heneicosanone, 10-nonadecanone, n-octadecaophenone, ditridecyl ketone, di-n-heptyldecyl ketone; palmitic acid, stearic acid, arachidic acid, behenic acid; n-octacosane, triacontane, tetratriacontane, tetracontane, pentacontane, microcrystalline wax, 2,6-diisopropylnapthalene; n-octadecyl ether, triethylene glycol-bis-3-(3-tert-butyl-4-hydroxy-5-methylphenyl) propionate.

According to an embodiment, the reaction medium for enabling a reversible electron transfer reaction between the components (a) and (b) above the melting or softening point of the reaction medium (component (c)) is not a mixture of compound (c), in particular, not a mixture of the above mentioned reaction medium c).

In some embodiments, the electron-donative organic compound may be selected from 3-(4-diethylamino-2-ethoxyphenyl)-3-(1-ethyl-2-methylindol-3-yl)-4-azaphthalide (Blue 63, CAS number 69898-40-4), 2'-(dibenzylamino)-6'-(diethylamino)fluorane (CAS number 34372-72-0), N,N-dimethyl-4-[2-[2-(octyloxy)phenyl]-6-phenyl-4-pyridinyl]benzenamine (yellow CK37, CAS number 144190-25-0), 7-(4-diethylamino-2-hexyloxyphenyl)-7-(1-ethyl-2-methyl-1H-indol-3-yl)-7H-furo[3,4-b]pyridin-5-one (Blue 203, CAS number 98660-18-5), 2-(2,4-dimethylphenylamino)-3-methyl-6-diethylaminofluoran (Black 15, CAS number: 36431-22-8), and 3,3-bis-(1-butyl-2-methyl-indol-3-yl)-3H-isobenzofuran-1-one (Red 40, CAS number 50292-91-6).

In some embodiments, the electron-accepting compound, also referred to as "developer", may be selected from 4,4'-cyclohexylidene bisphenol (Bisphenol Z, CAS number 843-55-0), 2,2-bis(4-hydroxy-3-methylphenyl)propane (Bisphenol C, CAS number 79-97-0), 4-hexyl-1,3-dihydroxybenzene (4-hexylresorcinol, CAS number 136-77-6), 4,4'-(hexafluoroisopropylidene)diphenol (Bisphenol AF, CAS number 1478-61-1), 4,4'-(1-phenylethylidene)bisphenol (CAS number 1571-75-1), 2,2'-dihydroxybiphenyl (CAS number 1806-29-7), 4,4'-(1,4-phenylenediisopropylidene)bisphenol (CAS number 2167-51-3), 1,1-bis(4-hydroxy-3-methylphenyl)cyclohexane (CAS number 2362-14-3), 9,9-bis(4-hydroxyphenyl)fluorene (CAS number 3236-71-3), 4,4'-(1,3-phenylenediisopropylidene)bisphenol (CAS number 13595-25-0), 1,1,1-tris(4-hydroxyphenyl)ethane (CAS number 27955-94-8), 4,4'-(2-ethylhexylidene)diphenol (CAS number 74462-02-5), α,α,α'-tris(4-hydroxyphenyl)-1-ethyl-4-isopropylbenzene (CAS number 110726-28-8), 3,5,4'-trihydroxy-*trans*-stilbene (resveratrol, CAS number 501-36-0).

In some embodiments, the thermochromic coating may further comprise a non-thermosensitive colorant.

In some embodiments, the thermochromic coating may be configured to depict one or more symbols in response to an increase of the temperature of the metallic shield to the first temperature of about 60 °C or above.

In some embodiments, the thermochromic coating may be configured to depict one or more symbols or a color in response to an increase of the temperature of the metallic shield to the first temperature of about 60 °C or above and the one or more symbols or color may be formed by a non-thermosensitive colorant. The thermochromic coating may be configured to at least partially disguise the one or more symbols or color formed by the non-thermosensitive colorant at a temperature of the metallic shield below about the first temperature of about 60 °C and the thermochromic coating may be configured to change from a colored state to a decolored state in response to an increase of the temperature of the metallic shield to the first temperature of about 60 °C or above. In some embodiments, it may be advantageous that the thermochromic coating comprises at least two layers, wherein an inner layer comprises the non-thermosensitive colorant and an outer layer comprises the components (a), (b) and (c).

In some embodiments, the thermochromic coating may be printed onto the metallic shield. In some embodiments, the thermochromic coating may be a label which is affixed onto the metallic shield with an adhesive.

In a second aspect, the present disclosure is directed to a process of preparing a handheld lighter for igniting a combustible material as described in the first aspect of the present disclosure. The process comprises the set of applying a thermochromic coating as described in the first aspect of the present disclosure onto a metallic shield.

The thermochromic coating may be further defined as for the first aspect of the present disclosure.

In a third aspect, the present disclosure is directed to the use of a thermochromic coating as a temperature warning indicator for a handheld lighter for igniting a combustible material. The handheld lighter comprises an ignition mechanism for generating a heat source. It comprises an actuating means for activating the ignition mechanism. It comprises a metallic shield positioned adj acent to the ignition mechanism and at a distance to the ignition mechanism such that the metallic shield is heated by the heat source when the handheld lighter is operated. It comprises a housing. The housing comprises the ignition mechanism, the actuating means and the metallic shield.

The temperature warning indicator comprises a thermochromic coating. The thermochromic coating comprises
(a) an electron-donative organic compound (component (a)), an electron-accepting compound (component (b)), and a reaction medium which may allow or cause an electron transfer reaction between the components (a) and (b) above the melting or softening point of the reaction medium (component (c)). The electron transfer reaction is reversible. The thermochromic coating is configured to reversibly change color in response to an increase of the temperature of the metallic shield to a first temperature of about 60 °C or above. The thermochromic coating is configured to reversibly change color in response to a decrease of the temperature of the metallic shield to a second temperature which is about 0 to about 20 °C below the first temperature.

The thermochromic coating may be further defined as for the first aspect of the present disclosure.

### Brief Description of the Drawings

Fig. 1 shows an example of a handheld lighter according to the present disclosure.
Fig. 2 is a graph for explaining a hysteresis characteristic of the thermochromic coloring color-composition of the present disclosure in a color density-temperature curve.

### Detailed Description of the Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a handheld lighter for igniting a combustible material. The type of handheld lighter is not particularly limited and may include, amongst others, a lighter that utilizes a gas flame, an electrically heated coil, or an electric arc as a heat source. The handheld lighter comprises an ignition mechanism for generating the heat source. In case of a gas flame, the ignition mechanism may comprise a means for mechanically or electrically generating a spark and a valve connected to a gas reservoir which supplies combustible gas to the ignition mechanism. The actuating means for activating the ignition mechanism may be lever which opens the valve upon actuation by the user. The handheld lighter comprises a metallic shield positioned adjacent to the ignition mechanism and at a distance to the ignition mechanism such that the metallic shield is heated by the heat source when the handheld lighter is operated. The shape and purpose of the metallic shield is not particularly limited and can be provided for a number of purposes such as protecting the heat source from outside interference, shielding a gas flame from wind, housing or mounting components of the lighter, or hiding internal components of the lighter from view for aesthetic reasons. The handheld lighter comprises a housing. The housing comprises the ignition mechanism, the actuating means and the metallic shield. The housing is not particularly limited and may further comprise additional lighter components such as a reservoir for fueling the heat source of the lighter, in particular a gas tank and/or a battery. Such components may be replaceable or rechargeable.

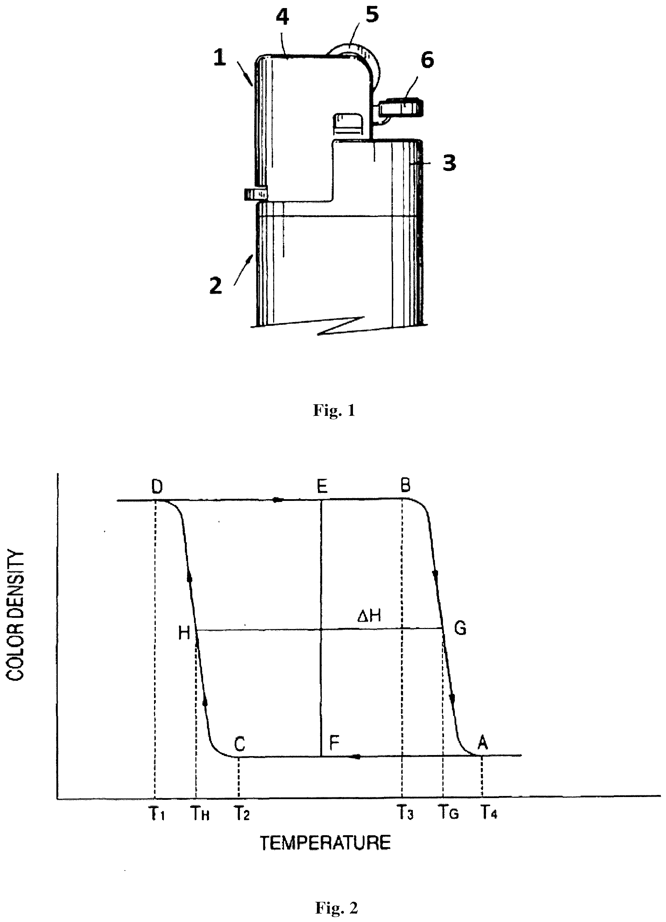

An example of a handheld lighter according to the present disclosure is described below with reference to Fig. 1.

In one embodiment, the handheld lighter according to the present disclosure may generate a gas flame. Accordingly, the lighter may comprise an upper portion 1 and a lower portion 2. Lower portion 2 may contain the tank for the fuel used, in particular liquid butane gas under pressure, or some other conventional lighter fuel. The upper portion 1 may comprise an upper seat member 3 mounting the ignition mechanism including a nozzle and valve mechanism, an actuation means for operating the valve mechanism, as well as wind shield 4 mounting and enclosing the ignition mechanism. In the embodiment shown in Fig. 1, the ignition mechanism is of the well-known mechanical type comprising a hand-actuated ignition wheel or drum 5 and flint arranged for cooperation therewith. The ignition wheel 5 may comprise two knurled side sections of slightly larger diameter for actuation by the user, and a main section of slightly smaller diameter and having a suitably roughened surface to strike ignition sparks from a flint stone arranged to cooperate with the ignition wheel, on actuation thereof. The ignition wheel 5 may slightly project from the upper end of windshield 4, for actuation by the user, whereas the flint stone may be arranged below the horizontally mounted ignition wheel 5 so that the generated ignition sparks will be directed towards a burner unit of the ignition mechanism within windshield 4. In the embodiment according to Fig. 1, the lighter may comprise an actuating means which comprises an actuating lever 6 pivotably mounted below the ignition wheel 5 and arranged such in a manner that if the user actuates ignition wheel 5 with the thumb of the hand holding the lighter, the thumb will press lever 6 causing its counter-piece to pivot from its rest position into an actuated position in which the valve which is cooperatively arranged with said counter-piece is opened such that gas may be supplied to the burner unit of the ignition mechanism.

The metallic shield of the handheld lighter comprises a thermochromic coating. The term thermochromic coating may refer to the fact that the color appearance of a coating on the metallic shield changes in response to a temperature change of the metallic shield. The type of coating is not particularly limited and intended to in particular also include films, labels and strips of materials which are provided on the surface of the metallic shield. The thermochromic coating comprises an electron-donative organic compound (component (a)), an electron-accepting compound (component (b)), and a reaction medium which enables an electron transfer reaction between the components (a) and (b) above the melting or softening point of the reaction medium (component (c)). The electron transfer reaction is reversible. The thermochromic coating is configured to reversibly change color in response to an increase of the temperature of the metallic shield to a first temperature of about 60 °C or above. The thermochromic coating is configured to reversibly change color in response to a decrease of the temperature of the metallic shield to a second temperature which is about 0 to about 20 °C below the first temperature. It should be understood that the aforementioned color-change refers to the color impression (to the human eye) derived from the color-forming electron transfer reaction between component (a) and (b) and in particular includes a change from color to colorless and vice-versa, and perceivable changes in color intensity.

In some embodiments, it may be advantageous that thermochromic coating is configured to reversibly change color in response to an increase of the temperature of the metallic shield to a first temperature of about 65 °C or above, or about 70°C or above, or about 75°C or above.

The electron-donative organic compound (component (a)) may be a compound which develops a color impression by reacting with an electron-accepting compound. The electron-donative color developing organic compound is not particularly limited as long as it is suitable to form a thermochromic coating which may be configured to reversibly change color in response to an increase of the temperature of the metallic shield to a first temperature of about 60 °C or above and to reversibly change color in response to a decrease of the temperature of the metallic shield to a second temperature which is about 0 to about 20 °C below the first temperature.

In some embodiments, the electron-donative organic compound may be selected from 3-(4-diethylamino-2-ethoxyphenyl)-3-(1-ethyl-2-methylindol-3-yl)-4-azaphthalide (Blue 63, CAS number 69898-40-4), 2'-(dibenzylamino)-6'-(diethylamino)fluorane (CAS number 34372-72-0), N,N-dimethyl-4-[2-[2-(octyloxy)phenyl]-6-phenyl-4-pyridinyl]benzenamine (yellow CK37, CAS number 144190-25-0), 7-(4-diethylamino-2-hexyloxyphenyl)-7-(1-ethyl-2-methyl-1H-indol-3-yl)-7H-furo[3,4-b]pyridin-5-one (Blue 203, CAS number 98660-18-5), 2-(2,4-dimethylphenylamino)-3-methyl-6-diethylaminofluoran (Black 15, CAS number: 36431-22-8), and 3,3-bis-(1-butyl-2-methyl-indol-3-yl)-3H-isobenzofuran-1-one (Red 40, CAS number 50292-91-6).

It should be understood that a single electron-donative organic compound may be used or that a plurality of electron-donative organic compounds may be used. This may allow to fine-tune the perceived color impression.

The electron-accepting compound (component (b)) may be a compound which reacts with the electron-donative organic compound under formation of a colorant or of a color impression. The electron-accepting compound may be a compound which has an active proton, a pseudo acidic compound or a compound having an electron hole. The electron-accepting compound is not particularly limited and may be in particular selected from a compound having a phenolic hydroxyl group (such as phenol, o-cresol, m-octylphenol, n-dodecylphenol, n-stearylphenol, bisphenols, and resorcinols), carboxylic acids and the metal salts thereof (such as zinc salicylate, zinc 3,5-di(alpha-methylbenzyl) salicylate), acidic phosphate esters and metal salts thereof, urea thiourea-based compound and derivatives thereof and 1,2,3-triazole and derivatives thereof. Of course, it must be suitably selected to be able to form a thermochromic coating which may be configured to reversibly change color in response to an increase of the temperature of the metallic shield to a first temperature of about 60 °C or above and to reversibly change color in response to a decrease of the temperature of the metallic shield to a second temperature which is about 0 to about 20 °C below the first temperature.

In some embodiments, the electron-accepting compound may be selected from 4,4'-cyclohexylidene bisphenol (Bisphenol Z, CAS number 843-55-0), 2,2-bis(4-hydroxy-3-methylphenyl)propane (Bisphenol C, CAS number 79-97-0), 4-hexyl-1,3-dihydroxybenzene (4-hexylresorcinol, CAS number 136-77-6), 4,4'-(hexafluoroisopropylidene)diphenol (Bisphenol AF, CAS number 1478-61-1), 4,4'-(1-phenylethylidene)bisphenol (CAS number 1571-75-1), 2,2'-dihydroxybiphenyl (CAS number 1806-29-7), 4,4'-(1,4-phenylenediisopropylidene)bisphenol (CAS number 2167-51-3), 1,1-bis(4-hydroxy-3-methylphenyl)cyclohexane (CAS number 2362-14-3), 9,9-bis(4-hydroxyphenyl)fluorene (CAS number 3236-71-3), 4,4'-(1,3-phenylenediisopropylidene)bisphenol (CAS number 13595-25-0), 1,1,1-tris(4-hydroxyphenyl)ethane (CAS number 27955-94-8), 4,4'-(2-ethylhexylidene)diphenol (CAS number 74462-02-5), α,α,α'-tris(4-hydroxyphenyl)-1-ethyl-4-isopropylbenzene (CAS number 110726-28-8), 3,5,4'-trihydroxy-*trans*-stilbene (resveratrol, CAS number 501-36-0).

It should be understood that a single electron-accepting compound may be used or that a plurality of electron-accepting compounds may be used. This may allow to fine-tune the perceived color impression.

In some embodiments, it may be advantageous that the thermochromic coating is configured to change from a colored state to a decolored state in response to an increase of the temperature of the metallic shield to the first temperature of about 60 °C or above. This property may be particularly beneficial to hide a temperature warning indicator which is revealed upon elevation of the temperature above a safety threshold. More specifically, it may be advantageous that the thermochromic coating is configured to reversibly discolor in response to an increase of the temperature of the metallic shield to a first temperature of about 60 °C or above and to reversibly recolor in response to a decrease of the temperature of the metallic shield to a second temperature which is about 0 to about 20 °C, specifically about 2 to 16°C, more specifically about 2 to about 11°C, and in particular about 4 and about 9 °C, below the first temperature.

Without wishing to be bound by theory, the discoloring effect upon an increase in temperature described in the aforementioned embodiment may be explained as follows: Components (a) and (b) may have formed a colored intermolecular complex in an electron-transfer reaction. The reaction medium (component (c)) may disrupt the electron transfer reaction between the components (a) and (b) above the melting or softening point of the reaction medium, hence causing the discoloration reaction. At about or above the softening or melting temperature of the reaction medium, component (c) may be sufficiently mobile to disrupt the electron transfer reaction between the components (a) and (b). Afterward, the component (c) may act as a solvent surrounding and isolating the components (a) and (b) from each other (solvating), thereby substantially preventing the color-forming electron transfer reaction between the components (a) and (b) at temperatures which are above the melting point or softening point of the reaction medium. Below the melting point or softening point of the reaction medium (c), the mixture (or the coating) is colored, due to the color-forming electron transfer reaction between component (a) and (b).

The melting point or softening point of the reaction medium may be determined by established means, such as differential thermal analysis (DTA) or differential scanning calorimetry (DSC).

In some embodiments, the reaction medium for enabling a reversible electron transfer reaction between the components (a) and (b) may be a waxy material. It should be understood that the term "waxy material" may refer to a wax or a material having wax-like properties, such as a malleable solid state at ambient temperatures and a defined melting point (in contrast to a melting point range as in case of many polymeric materials). It may be advantageous that the waxy material is a wax.

In some embodiments, the reaction medium for enabling a reversible electron transfer reaction between the components (a) and (b) above the melting or softening point of the reaction medium (component (c)) may be selected from the group including:
- alcohols, in particular an aliphatic linear alcohol having at least about 20 carbon atoms, more specifically an aliphatic linear alcohol having from about 20 to about 30 carbon atoms, even more specifically an alcohol selected form eicosanol, docosanol, tetracosanol, hexacosanol;
- carboxylic acid esters, in particular aliphatic carboxylic esters, or mono-, di-, tri-, or tetraesters of carboxylic acids, or esters of an carboxylic acid having at least about 12 carbon atoms;and in particular stearyl stearate, stearyl arachidate, stearyl behenate, arachidyl stearate, arachidyl arachidate, arachidyl behenate, behenyl stearate, behenyl arachidate, behenyl behenate, pentaerythritol tetrastearate, (dioctadecyl)-3,3'-thiodipropionate;
- ketones, in particular cyclododecanone, 4-methoxybenzophenone, 11-heneicosanone, 10-nonadecanone, n-octadecaophenone, ditridecyl ketone, di-n-heptyldecyl ketone;
- carboxylic acids, such as aliphatic carboxylic acids having at least about 16 carbon atoms, particularly such as palmitic acid, stearic acid, arachidic acid, behenic acid;
- hydrocarbons, in particular a hydrocarbon defined as organic compounds consisting entirely of hydrogen and carbon, more particularly straight-chained hydrocarbons having at least about 26 carbon atoms, more particularly having from about 26 to about 50 to carbon atoms, and even more particularly a hydrocarbon selected from n-octacosane, triacontane, tetratriacontane, tetracontane, pentacontane, microcrystalline wax;
- ethers, in particularn-octadecyl ether, triethylene glycol-bis-3-(3-tert-butyl-4-hydroxy-5-methylphenyl) propionate;
- and mixtures thereof.

In some embodiments, it may be advantageous that the reaction medium for enabling a reversible electron transfer reaction between the components (a) and (b) above the melting or softening point of the reaction medium (component (c)) is selected from eicosanol, docosanol, tetracosanol, hexacosanol; stearyl stearate, stearyl arachidate, stearyl behenate, arachidyl stearate, arachidyl arachidate, arachidyl behenate, behenyl stearate, behenyl arachidate, behenyl behenate, pentaerythritol tetrastearate, (dioctadecyl)-3,3'-thiodipropionate; cyclododecanone, 4-methoxybenzophenone, 11-heneicosanone, 10-nonadecanone, n-octadecaophenone, ditridecyl ketone, di-n-heptyldecyl ketone; palmitic acid, stearic acid, arachidic acid, behenic acid; n-octacosane, triacontane, tetratriacontane, tetracontane, pentacontane, microcrystalline wax,; n-octadecyl ether, triethylene glycol-bis-3-(3-tert-butyl-4-hydroxy-5-methylphenyl) propionate.

According to an embodiment, it may be advantageous that the reaction medium for enabling a reversible electron transfer reaction between the components (a) and (b) above the melting or softening point of the reaction medium (component (c)) is not a mixture of compound (c), in particular, not a mixture of the above mentioned reaction medium (component (c)).

In some embodiments, the reaction medium (component (c)) may be characterized by having a melting point or softening point of between about 60°C and about 95°C. It may be advantageous that the reaction medium has a melting point or softening point of about 60°C and about 85°C, in particular of about 65°C and about 80°C. The melting point or softening point of the core component may be determined by established means, such as differential thermal analysis (DTA) or differential scanning calorimetry (DSC).

In some embodiments, it may be advantageous that the melting or softening point of the component (c) remains substantially unchanged after cyclic exposure of the metallic shield to 10 cycles of heating the metallic shield until the metallic shield has reached a temperature of above the melting or softening point of the component (c) followed by cooling the metallic shield to a temperature below the melting or softening point of the component (c). The aforementioned property may describe that component (c) is not having a melt memory effect. Not having a melt memory effect for the component (c) may be beneficial for increasing the reliability in warning the user that the metallic shield is too hot to touch. However, such precision may not be needed for all applications.

The components (a), (b), and (c) may be suitably selected such that the thermochromic coating may reversibly change color in response to an increase of the temperature of the metallic shield to a first temperature of about 60 °C or above and to reversibly change color in response to a decrease of the temperature of the metallic shield to a second temperature which is about 0 to about 20 °C below the first temperature.

Without wishing to be bound by theory, the above properties may also be referred to as a thermochromic coating having a narrow hysteresis. The property of hysteresis will be elaborated in the following with reference to Fig. 2. Fig. 2 is a graph explaining the hysteresis characteristic of the thermochromic coating in a color density-temperature curve. In Fig. 2, shows the color development of a typical thermochromic coating. The color density of the thermochromic coating is plotted on the ordinate and the temperature on the abscissa. In this example, the thermochromic coating discolors with an increase in temperature. The change in the color density due to a temperature change will be explained following the progresses the lines of arrows. In Fig. 2, D is a point showing the density at a temperature T1 at which a completely colored state is given. With an increase in temperature, the completely colored state can be maintained until point B at temperature T3 is reached. Typically, this point approximately coincides with the onset of melting or softening of component (c). The coating then rapidly discolors until temperature T4 (wherein T4 corresponds to the complete melting or softening temperature of component (c)), at which a discolored state is reached. When again cooling the coating, the discolored state is maintained until point C, at temperature T2, is reached. This behavior of thermochromic pigments is well-established in the art. The length of the line segment EF is a measure showing contrast of discoloration, and the length of the line segment HG is a temperature width showing the hysteresis (ΔH). The line segment HG (i.e. the hysteresis ΔH) is based on temperatures T_{H} and T_{G} which are half-way between T1 and T2 and T3 and T4, respectively. It is a measure of how rapidly the color change takes place and how accurately the color change correlates to a specific temperature. As indicated, above the hysteresis should be narrow, i.e. ΔH should have a low value, for instance less than about 20°C, specifically less than about 15 °C, more specifically less than about 10 °C and in particular less than about 5 °C.

According to the present disclosure, for ease of reference and in view of embodiments in which an otherwise hidden temperature warning indicator is revealed at elevated temperatures, the increase of the temperature to "first temperature of about 60 °C or above" may refer to the temperature correlating to (substantially) complete discoloration (temperature T4). At this temperature, any temperature warning indicator may be best visible. Likewise, the decrease of the temperature to "a second temperature which is about 0 to about 20 °C below the first temperature" may refer to temperature correlating to (substantially) complete (re-)coloration of the thermochromic coating (temperature T1). At this temperature, any temperature warning indicator may be best hidden by the thermochromic coating. Accordingly, in some embodiments, the second temperature may be less than about 16°C, specifically less than about 11 °C, more specifically less than about 5 °C and in particular less than about 2 °C, below the first temperature.

In some embodiments, it may be advantageous to add a nucleation agent to the component (c). This may be helpful to further narrow the hysteresis.

In some embodiments, the thermochromic coating may comprise core-shell microcapsules. The core-shell microparticles may comprise a core component and a shell component. The core component may comprise the electron-donative organic compound (component (a)), the electron-accepting compound (component (b)), and the reaction medium for enabling a reversible electron transfer reaction between the components (a) and (b) above the melting or softening point of the reaction medium (component (c)). The shell component may comprise an organic polymer. Such an arrangement may be beneficial to facilitate stability and uniformity of the color change over time by introducing a further barrier which protects the components (a), (b), and (c) from external influences.

In some embodiments, the shell component may comprise a polyurea, a polymer derived from melamine, a polymer derived from guanamines, a polyamide, a polyester, a polyurethane, a polycondensation polymer, and mixtures thereof. It may be advantageous that the shell component comprises a melamine-formaldehyde resin.

The size of the core-shell microcapsules is not particularly limited as long as the size of microcapsules in the nanometer or micrometer-range. In some embodiments, the microcapsules may have a size of about 0.1 µm to about 100 µm, in particular about 0.1 µm to about 50 µm, specifically about 0.2 µm to about 20 µm, and in particular about 0.5 µm to about 10 µm. The microcapsules may generally have a spherical or substantially spherical shape and, thus, their size can be determined by conventional means such as microscopy or electron microscopy. In these cases, the measured 2-dimensional representation of the microcapsule diameter may be seen as representative for the afore-mentioned size of the microcapsules.

In some embodiments, it may be advantageous that the content of the electron-donative organic compound is from about 0.01% to about 15% by weight, and in particular from about 0.1% to about 10% by weight, based on the thermochromic coating as a whole.

In some embodiments, it may be advantageous that the electron-donative organic compound is contained in microcapsules in an amount of from about 0.1% by weight to about 30% by weight, and in particular from about 1% by weight to about 20% by weight, of microcapsules.

In some embodiments, it may be advantageous that the content of the electron-accepting compound is from about 0.01% to about 15% by weight, and in particular from about 0.1% to about 10% by weight, of the thermochromic coating as a whole.

In some embodiments, it may be advantageous that the electron-accepting compound is contained in the microcapsules in an amount of from about 0.1% by weight to about 30% by weight, and in particular from about 1% by weight to about 20% by weight, of microcapsules.

In some embodiments, it may be advantageous that the content of the reaction medium (component (c)) is from about 2 % to about 50% by weight, and in particular from about 3 % to about 45% by weight, of the thermochromic coating as a whole.

In some embodiments, it may be advantageous that the content of the reaction medium (component (c)) is an amount of from about 20% by weight to about 95% by weight, and in particular from about 30% by weight to about 90% by weight, of microcapsules.

In some embodiments, it may be advantageous that thermochromic coating may further comprise a non-thermosensitive colorant. Adding a non-thermosensitive colorant may be beneficial to add contrast or to modulate the color impression. It may also allow to incorporate a permanent temperature warning indicator which is modulated or hidden by the thermochromic coating.

In some embodiments, it may be advantageous that thermochromic coating may be configured to depict one or more symbols in response to an increase of the temperature of the metallic shield to a first temperature of about 60 °C or above or above about 65°C or above about 70 °C or above about 75 °C. In some embodiments, the thermochromic coating may be configured to depict one or more symbols or a color in response to an increase of the temperature of the metallic shield to a first temperature of about 60 °C or above, or above about 60 °C or above about 65°C or above about 70 °C or above about 75 °C, and the one or more symbols or color may be formed by a non-thermosensitive colorant. The thermochromic coating may be configured to at least partially disguise the one or more symbols or color formed by the non-thermosensitive colorant at a temperature of the metallic shield below about 60 °C, or about 65°C or about 70 °C or about 75 °C, and the thermochromic coating may be configured to change from a colored state to a decolored state in response to an increase of the temperature of the metallic shield to a first temperature of about 60 °C or above, or above about 60 °C or above about 65°C or above about 70 °C or above about 75 °C. In some embodiments, it may be advantageous that the thermochromic coating comprises at least two layers, wherein an inner layer comprises the non-thermosensitive colorant and an outer layer comprises the components (a), (b) and (c).

In some embodiments, the thermochromic coating may be printed onto the metallic shield. In some embodiments, the thermochromic coating may be a label which is affixed onto the metallic shield with an adhesive.

In a second aspect, the present disclosure is directed to a process of preparing a handheld lighter for igniting a combustible material as described in the first aspect of the present disclosure. The process comprises the set of applying a thermochromic coating as described in the first aspect of the present disclosure onto a metallic shield. It should be understood that the embodiments referred to above with respect to the first aspect of the disclosure equally apply to and are combinable with the second aspect of the disclosure. In a third aspect, the present disclosure is directed to the use of a thermochromic coating as a temperature warning indicator for a handheld lighter for igniting a combustible material. The handheld lighter comprises an ignition mechanism for generating a heat source. It comprises an actuating means for activating the ignition mechanism. It comprises a metallic shield positioned adj acent to the ignition mechanism and at a distance to the ignition mechanism such that the metallic shield is heated by the heat source when the handheld lighter is operated. It comprises a housing. The housing comprises the ignition mechanism, the actuating means and the metallic shield.

The temperature warning indicator comprises a thermochromic coating. The thermochromic coating comprises an electron-donative organic compound (component (a)), an electron-accepting compound (component (b)), and a reaction medium which may allow or cause an electron transfer reaction between the components (a) and (b) above the melting or softening point of the reaction medium (component (c)). The electron transfer reaction is reversible. The thermochromic coating is configured to reversibly change color in response to an increase of the temperature of the metallic shield to a first temperature of about 60 °C or above. The thermochromic coating is configured to reversibly change color in response to a decrease of the temperature of the metallic shield to a second temperature which is about 0 to about 20 °C below the first temperature.

It should be understood that the embodiments referred to above with respect to the first aspect of the disclosure equally apply to and are combinable with the third aspect of the disclosure.

In the following the present disclosure will be further elaborated by way of Examples.

### Examples

The preparation of the thermochromic pigments and microcapsules is well-known in the art. These pigments and microcapsules can be processed to coatings and labels by conventional ink processing technology.

In a first simple example, a red leuco dye (3,3-bis-(1-butyl-2-methyl-indol-3-yl)-3H-isobenzofuran-1-one (Red 40, CAS number 50292-91-6)) is formulated with 4,4'-cyclohexylidene bisphenol (Bisphenol Z, CAS number 843-55-0) and with 1-eicosanol (melting point: 64°C) to provide a red thermochromic coating at room temperature which is discolored upon heating the windshield of a gas-flame lighter at 64°C and recolors upon cooling the metallic windshield to below 59°C.

In a more elaborate second example, the metallic windshield of a handheld gas-flame lighter is first coated with a permanent non-thermochromic coating which contains a water- and light-resistant red pigment (for example Levanyl Rot BB-LF from Lanxess). The coating is applied onto the metallic windshield to form of a red temperature warning indicator, more specifically the wording "BURN RISK". This first coating is overcoated with a thermochromic coating composition comprising conventionally prepared core-shell microcapsules comprising 2-(2,4-dimethylphenylamino)-3-methyl-6-diethylaminofluoran (Black 15, CAS number: 36431-22-8, available from Chemos GmbH & Co. KG) as component (a), 4,4'-cyclohexylidene bisphenol (Bisphenol Z, CAS number 843-55-0, available from Sigma-Aldrich) as component (b), and 1-eicosanol (a wax with a melting point of 64°C, available from Sigma-Aldrich) as component (c) in a formaldehyde-melamine shell. The thermochromic coating composition is black at room temperature and disguises the red temperature warning indicator, more specifically the wording "BURN RISK" at room temperature. The black thermochromic coating turns transparent at about the melting temperature of the component (c), i.e. at about 64°C, revealing the wording red wording "BURN RISK". Once the metallic windshield cools below about 60 °C, the thermochromic coating rapidly turns black again and hides the temperature warning indicator. Since 1-eicosanol is a wax not having a melt memory effect, the temperature at which the temperature warning indicator is revealed remains substantially unchanged after cyclic exposure of the metallic shield to 10 cycles of heating the metallic shield to above 64 °C, followed by cooling the metallic shield to temperatures below 60°C.

In a third example, the coating layers of the second example are applied to a label having an adhesive layer. The label is then attached to the metallic windshield of a handheld gas-flame lighter.

## Claims

1. A handheld lighter for igniting a combustible material comprising:
an ignition mechanism for generating a heat source;
an actuating means for activating the ignition mechanism;
a metallic shield positioned adjacent to the ignition mechanism and at a distance to the ignition mechanism such that the metallic shield is heated by the heat source when the handheld lighter is operated; and
a housing comprising the ignition mechanism, the actuating means and the metallic shield;
wherein the metallic shield comprises a thermochromic coating comprising:
(a) an electron-donative organic compound (component (a)),
(b) an electron-accepting compound (component (b)), and
(c) a reaction medium enabling a reversible electron transfer reaction between the components (a) and (b) above the melting or softening point of the reaction medium (component (c)); and
wherein the thermochromic coating is configured to reversibly change color in response to an increase of the temperature of the metallic shield to a first temperature of about 60 °C or above and to reversibly change color in response to a decrease of the temperature of the metallic shield to a second temperature which is about 0 to about 20 °C below the first temperature.

2. The handheld lighter of claim 1, wherein the heat source is a gas flame and wherein the metallic shield is a wind shield.

3. The handheld lighter of claim 1 or claim 2, wherein the thermochromic coating comprises core-shell microcapsules, wherein the core-shell microparticles comprise a core component and a shell component, wherein the core component comprises the electron-donative organic compound (component (a)), the electron-accepting compound (component (b)), and the reaction medium for enabling a reversible electron transfer reaction between the components (a) and (b) above the melting or softening point of the reaction medium (component (c)) and wherein the shell component comprises an organic polymer.

4. The handheld lighter of any one of claims 1 to 3, wherein the thermochromic coating is configured to change from a colored state to a discolored state in response to an increase of the temperature of the metallic shield to the first temperature of about 60 °C or above.

5. The handheld lighter of any one of claims 1 to 4, wherein the melting or softening point of the component (c) remains substantially unchanged after cyclic exposure of the metallic shield to 10 cycles of heating the metallic shield until the metallic shield has reached a temperature of above the melting or softening point of the component (c) followed by cooling the metallic shield to a temperature below the melting or softening point of the component (c).

6. The handheld lighter of any one of claims 1 to 5, wherein the reaction medium for enabling a reversible electron transfer reaction between the components (a) and (b) is a waxy material, in particular a wax, having a melting point of between about 60°C and about 95°C, specifically between about 60°C and about 85°C, and in particular between about 65°C and about 80°C.

7. The handheld lighter of any one of claims 1 to 6, wherein the reaction medium for enabling a reversible electron transfer reaction between the components (a) and (b) above the melting or softening point of the reaction medium (c) is selected from the group of eicosanol, docosanol, tetracosanol, hexacosanol; stearyl stearate, stearyl arachidate, stearyl behenate, arachidyl stearate, arachidyl arachidate, arachidyl behenate, behenyl stearate, behenyl arachidate, behenyl behenate, pentaerythritol tetrastearate, (dioctadecyl)-3,3'-thiodipropionate; glycerol monolaurate, glycerol monostearate, glycerol dilaurate, glycerol distearate, glycerol dibehenate, glycerol tripalmitate, glycerol tristearate, glycerol tribehenate; cyclododecanone, 4-methoxybenzophenone, 11-heneicosanone, 10-nonadecanone, n-octadecaophenone, ditridecyl ketone, di-n-heptyldecyl ketone; palmitic acid, stearic acid, arachidic acid, behenic acid; n-octacosane, triacontane, tetratriacontane, tetracontane, pentacontane, microcrystalline wax, 2,6-diisopropylnapthalene; n-octadecyl ether, triethylene glycol-bis-3-(3-tert-butyl-4-hydroxy-5-methylphenyl) propionate.

8. The handheld lighter of any one of claims 1 to 7, wherein the electron-donative organic compound is selected from 3-(4-diethylamino-2-ethoxyphenyl)-3-(1-ethyl-2-methylindol-3-yl)-4-azaphthalide (Blue 63, CAS number 69898-40-4), 2'-(dibenzylamino)-6'-(diethylamino)fluorane (CAS number 34372-72-0), N,N-dimethyl-4-[2-[2-(octyloxy)phenyl]-6-phenyl-4-pyridinyl]benzenamine (yellow CK37, CAS number 144190-25-0), 7-(4-diethylamino-2-hexyloxyphenyl)-7-(1-ethyl-2-methyl-1H-indol-3-yl)-7H-furo[3,4-b]pyridin-5-one (Blue 203, CAS number 98660-18-5), 2-(2,4-dimethylphenylamino)-3-methyl-6-diethylaminofluoran (Black 15, CAS number: 36431-22-8), and 3,3-bis-(1-butyl-2-methyl-indol-3-yl)-3H-isobenzofuran-1-one (Red 40, CAS number 50292-91-6) and/or wherein the electron-accepting compound is selected from 4,4•-cyclohexylidene bisphenol (Bisphenol Z, CAS number 843-55-0), 2,2-bis(4-hydroxy-3-methylphenyl)propane (Bisphenol C, CAS number 79-97-0), 4-hexyl-1,3-dihydroxybenzene (4-hexylresorcinol, CAS number 136-77-6), 4,4'-(hexafluoroisopropylidene)diphenol (Bisphenol AF, CAS number 1478-61-1), 4,4•-(1-phenylethylidene)bisphenol (CAS number 1571-75-1), 2,2'-dihydroxybiphenyl (CAS number 1806-29-7), 4,4'-(1,4-phenylenediisopropylidene)bisphenol (CAS number 2167-51-3), 1,1-bis(4-hydroxy-3-methylphenyl)cyclohexane (CAS number 2362-14-3), 9,9-bis(4-hydroxyphenyl)fluorene (CAS number 3236-71-3), 4,4'-(1,3-phenylenediisopropylidene)bisphenol (CAS number 13595-25-0), 1,1,1-tris(4-hydroxyphenyl)ethane (CAS number 27955-94-8), 4,4'-(2-ethylhexylidene)diphenol (CAS number 74462-02-5), •,•,•'-tris(4-hydroxyphenyl)-1-ethyl-4-isopropylbenzene (CAS number 110726-28-8), 3,5,4•-trihydroxy-*trans*-stilbene (resveratrol, CAS number 501-36-0).

9. The handheld lighter of any one of claims 1 to 8, wherein the thermochromic coating further comprises a non-thermosensitive colorant.

10. The handheld lighter of any one of claims 1 to 9, wherein the thermochromic coating is configured to depict one or more symbols in response to an increase of the temperature of the metallic shield to the first temperature of about 60 °C or above.

11. The handheld lighter of any one of claims 1 to 10, wherein the thermochromic coating is configured to depict one or more symbols or a color in response to an increase of the temperature of the metallic shield to the first temperature of about 60 °C or above, wherein the one or more symbols or color are formed by a non-thermosensitive colorant; wherein the thermochromic coating is configured to at least partially disguise the one or more symbols or color formed by the non-thermosensitive colorant at the first temperature of the metallic shield below about 60 °C; and
wherein the thermochromic coating is configured to change from a colored state to a decolored state in response to an increase of the temperature of the metallic shield to the first temperature of about 60 °C or above.

12. The handheld lighter of claim 11, wherein the thermochromic coating comprises at least two layers, wherein an inner layer comprises the non-thermosensitive colorant and an outer layer comprises the components (a), (b) and (c).

13. The handheld lighter of any one of claims 1 to 12, wherein the thermochromic coating is printed onto the metallic shield or wherein the thermochromic coating is a label which is affixed onto the metallic shield with an adhesive.

14. Process of preparing a handheld lighter for igniting a combustible material according to any one of claims 1 to 13, comprising applying a thermochromic coating onto a metallic shield.

15. Use of a thermochromic coating as a temperature warning indicator for a handheld lighter for igniting a combustible material;
wherein the handheld lighter for igniting a combustible material comprises:
an ignition mechanism for generating a heat source;
an actuating means for activating the ignition mechanism;
a metallic shield positioned adjacent to the ignition mechanism and at a distance to the ignition mechanism such that the metallic shield is heated by the heat source when the handheld lighter is operated; and
a housing comprising the ignition mechanism, the actuating means and the metallic shield; and
wherein the thermochromic coating comprises:
(a) an electron-donative organic compound (component (a)),
(b) an electron-accepting compound (component (b)), and
(c) a reaction medium for enabling a reversible electron transfer reaction between the components (a) and (b) above the melting or softening point of the reaction medium (component (c)); and
wherein the thermochromic coating is configured to reversibly change color in response to an increase of the temperature of the metallic shield to a first temperature of about 60 °C or above and to reversibly change color in response to a decrease of the temperature of the metallic shield to a second temperature which is about 0 to about 20 °C below the first temperature.

## Patentansprüche

1. Handfeuerzeug zum Entzünden eines brennbaren Materials, umfassend:
einen Zündmechanismus zum Erzeugen einer Wärmequelle;
ein Betätigungsmittel zum Aktivieren des Zündmechanismus;
eine metallische Abschirmung, die angrenzend an den Zündmechanismus und in einem Abstand zu dem Zündmechanismus derart positioniert ist, dass die metallische Abschirmung durch die Wärmequelle erwärmt wird, wenn das Handfeuerzeug betrieben wird; und
ein Gehäuse, umfassend den Zündmechanismus, das Betätigungsmittel und die metallische Abschirmung;
wobei die metallische Abschirmung eine thermochrome Beschichtung umfasst, umfassend:
(a) eine elektronendonative organische Verbindung (Komponente (a)),
(b) eine elektronenaufnehmende Verbindung (Komponente (b)), und
(c) ein Reaktionsmedium, das eine reversible Elektronentransferreaktion zwischen den Komponenten (a) und (b) über dem Schmelz- oder Erweichungspunkt des Reaktionsmediums (Komponente (c)) ermöglicht; und
wobei die thermochrome Beschichtung konfiguriert ist, um die Farbe als Reaktion auf eine Erhöhung der Temperatur der metallischen Abschirmung auf eine erste Temperatur von etwa 60 °C oder mehr reversibel zu ändern und die Farbe als Reaktion auf eine Abnahme der Temperatur der metallischen Abschirmung auf eine zweite Temperatur reversibel zu ändern, die etwa 0 bis etwa 20 °C unterhalb der ersten Temperatur liegt.

2. Handfeuerzeug nach Anspruch 1, wobei die Wärmequelle eine Gasflamme ist und wobei die metallische Abschirmung eine Windabschirmung ist.

3. Handfeuerzeug nach Anspruch 1 oder 2, wobei die thermochrome Beschichtung Kern-Schale-Mikrokapseln umfasst, wobei die Kern-Schale-Mikropartikel eine Kernkomponente und eine Schalenkomponente umfassen, wobei die Kernkomponente die elektronendonative organische Verbindung (Komponente (a)), die elektronenaufnehmende Verbindung (Komponente (b)) und das Reaktionsmedium zum Ermöglichen einer reversiblen Elektronentransferreaktion zwischen den Komponenten (a) und (b) über dem Schmelz- oder Erweichungspunkt des Reaktionsmediums (Komponente (c)) umfasst und wobei die Schalenkomponente ein organisches Polymer umfasst.

4. Handfeuerzeug nach einem der Ansprüche 1 bis 3, wobei die thermochrome Beschichtung konfiguriert ist, um sich als Reaktion auf eine Erhöhung der Temperatur der metallischen Abschirmung auf die erste Temperatur von etwa 60 °C oder mehr aus einem farbigen Zustand in einen verfärbten Zustand zu ändern.

5. Handfeuerzeug nach einem der Ansprüche 1 bis 4, wobei der Schmelz- oder Erweichungspunkt der Komponente (c) nach einer zyklischen Aussetzung der metallischen Abschirmung gegenüber 10 Zyklen des Erwärmens der metallischen Abschirmung im Wesentlichen unverändert bleibt, bis die metallische Abschirmung eine Temperatur von über dem Schmelz- oder Erweichungspunkt der Komponente (c) erreicht hat, gefolgt von einem Abkühlen der metallischen Abschirmung auf eine Temperatur unter dem Schmelz- oder Erweichungspunkt der Komponente (c).

6. Handfeuerzeug nach einem der Ansprüche 1 bis 5, wobei das Reaktionsmedium zum Ermöglichen einer reversiblen Elektronentransferreaktion zwischen den Komponenten (a) und (b) ein Wachsmaterial, insbesondere ein Wachs, ist, das einen Schmelzpunkt zwischen etwa 60 °C und etwa 95 °C, insbesondere zwischen etwa 60 °C und etwa 85 °C und insbesondere zwischen etwa 65 °C und etwa 80 °C aufweist.

7. Handfeuerzeug nach einem der Ansprüche 1 bis 6, wobei das Reaktionsmedium zum Ermöglichen einer reversiblen Elektronentransferreaktion zwischen den Komponenten (a) und (b) über dem Schmelz- oder Erweichungspunkt des Reaktionsmediums (c) ausgewählt ist aus der Gruppe von Eicosanol, Docosanol, Tetracosanol, Hexacosanol; Stearylstearat, Stearylarachidat, Stearylbehenat, Arachidylstearat, Arachidylarachidat, Arachidylbehenat, Behenylstearat, Behenylarachidat, Behenylbehenat, Pentaerythritoltetrastearat, (Dioctadecyl)-3,3'-thiodipropionat; Glycerinmonolaurat, Glycerinmonostearat, Glycerindilaurat, Glycerindistearat, Glycerindibehenat, Glycerintripalmitat, Glycerintristearat, Glycerintribehenat; Cyclododecanon, 4-Methoxybenzophenon, 11-Heneicosanon, 10-Nonadecanon, n-Octadecaophenon, Ditridecylketon, Di-n-Heptyldecylketon; Palmitinsäure, Stearinsäure, Arachinsäure, Behensäure; n-Octacosan, Triacontan, Tetratriacontan, Tetracontan, Pentacontan, mikrokristallines Wachs, 2,6-Diisopropylnapthalin; n-Octadecylether, Triethylenglykol-bis-3-(3-tert-butyl-4-hydroxy-5-methylphenyl)propionat.

8. Handfeuerzeug nach einem der Ansprüche 1 bis 7, wobei die elektronendonative organische Verbindung ausgewählt ist aus 3-(4-Diethylamino-2-ethoxyphenyl)-3-(1-ethyl-2-methylindol-3-yl)-4-azaphthalid (Blau 63, CAS-Nummer 69898-40-4), 2'-(Dibenzylamino)-6'-(diethylamino)fluoran (CAS-Nummer 34372-72-0), N,N-Dimethyl-4-[2-[2-(octyloxy)phenyl]-6-phenyl-4-pyridinyl]benzolamin (Gelb CK37, CAS-Nummer 144190-25-0), 7-(4-Diethylamino-2-hexyloxyphenyl)-7-(1-ethyl-2-methyl-1H-indol-3-yl)-7H-furo[3,4-b]pyridin-5-on (Blau 203, CAS-Nummer 98660-18-5), 2-(2,4-Dimethylphenylamino)-3-methyl-6-diethylaminofluoran (Schwarz 15, CAS-Nummer: 36431-22-8) und 3,3-Bis-(1-butyl-2-methyl-indol-3-yl)-3H-isobenzofuran-1-on (Rot 40, CAS-Nummer 50292-91-6) und/oder wobei die elektronenaufnehmende Verbindung ausgewählt ist aus 4,4-Cyclohexylidenbisphenol (Bisphenol Z, CAS-Nummer 843-55-0), 2,2-Bis(4-hydroxy-3-methylphenyl)propan (Bisphenol C, CAS-Nummer 79-97-0), 4-Hexyl-1,3-dihydroxybenzol (4-Hexylresorcin, CAS-Nummer 136-77-6), 4,4'-(Hexafluorisopropyliden)diphenol (Bisphenol AF, CAS-Nummer 1478-61-1), 4,4-(1-Phenylethyliden)bisphenol (CAS-Nummer 1571-75-1), 2,2'-Dihydroxybiphenyl (CAS-Nummer 1806-29-7), 4,4'-(1, 4-Phenylendiisopropyliden)bisphenol (CAS-Nummer 2167-51-3), 1,1-Bis(4-hydroxy-3-methylphenyl)cyclohexan (CAS-Nummer 2362-14-3), 9,9-Bis(4-hydroxyphenyl)fluoren (CAS-Nummer 3236-71-3), 4,4'-(1,3-Phenylendiisopropyliden)bisphenol (CAS-Nummer 13595-25-0), 1,1,1-Tris(4-hydroxyphenyl)ethan (CAS-Nummer 27955-94-8), 4,4'-(2-Ethylhexyliden)diphenol (CAS-Nummer 74462-02-5), •,•,•'-Tris(4-hydroxyphenyl)-1-ethyl-4-isopropylbenzol (CAS-Nummer 110726-28-8), 3,5,4•-Trihydroxy-*trans*-stilben (Resveratrol, CAS-Nummer 501-36-0).

9. Handfeuerzeug nach einem der Ansprüche 1 bis 8, wobei die thermochrome Beschichtung ferner einen nicht thermoempfindlichen Farbstoff umfasst.

10. Handfeuerzeug nach einem der Ansprüche 1 bis 9, wobei die thermochrome Beschichtung konfiguriert ist, um ein oder mehrere Symbole als Reaktion auf eine Erhöhung der Temperatur der metallischen Abschirmung auf die erste Temperatur von etwa 60 °C oder mehr darzustellen.

11. Handfeuerzeug nach einem der Ansprüche 1 bis 10, wobei die thermochrome Beschichtung konfiguriert ist, um ein oder mehrere Symbole oder eine Farbe als Reaktion auf eine Erhöhung der Temperatur der metallischen Abschirmung auf die erste Temperatur von etwa 60 °C oder mehr darzustellen, wobei das eine oder die mehreren Symbole oder die Farbe durch einen nicht thermoempfindlichen Farbstoff gebildet werden; wobei die thermochrome Beschichtung konfiguriert ist, um das eine oder die mehreren Symbole oder die Farbe, die durch den nicht thermoempfindlichen Farbstoff gebildet werden, bei der ersten Temperatur der metallischen Abschirmung unter etwa 60 °C mindestens teilweise zu verschleiern; und
wobei die thermochrome Beschichtung konfiguriert ist, um als Reaktion auf eine Erhöhung der Temperatur der metallischen Abschirmung auf die erste Temperatur von etwa 60 °C oder mehr aus einem farbigen Zustand in einen entfärbten Zustand zu ändern.

12. Handfeuerzeug nach Anspruch 11, wobei die thermochrome Beschichtung mindestens zwei Schichten umfasst, wobei eine Innenschicht den nicht thermoempfindlichen Farbstoff umfasst und eine Außenschicht die Komponenten (a), (b) und (c) umfasst.

13. Handfeuerzeug nach einem der Ansprüche 1 bis 12, wobei die thermochrome Beschichtung auf die metallische Abschirmung gedruckt ist oder wobei die thermochrome Beschichtung ein Etikett ist, das mit einem Klebstoff auf die metallische Abschirmung befestigt ist.

14. Verfahren zum Herstellen eines Handfeuerzeugs zum Zünden eines brennbaren Materials nach einem der Ansprüche 1 bis 13, umfassend ein Aufbringen einer thermochromen Beschichtung auf eine metallische Abschirmung.

15. Verwendung einer thermochromen Beschichtung als einen Temperaturwarnindikator für ein Handfeuerzeug zum Zünden eines brennbaren Materials;
wobei das Handfeuerzeug zum Zünden eines brennbaren Materials umfasst:
einen Zündmechanismus zum Erzeugen einer Wärmequelle;
ein Betätigungsmittel zum Aktivieren des Zündmechanismus;
eine metallische Abschirmung, die angrenzend an den Zündmechanismus und in einem Abstand zu dem Zündmechanismus derart positioniert ist, dass die metallische Abschirmung durch die Wärmequelle erwärmt wird, wenn das Handfeuerzeug betrieben wird; und
ein Gehäuse, umfassend den Zündmechanismus, das Betätigungsmittel und die metallische Abschirmung; und
wobei die thermochrome Beschichtung umfasst:
(a) eine elektronendonative organische Verbindung (Komponente (a)),
(b) eine elektronenaufnehmende Verbindung (Komponente (b)), und
(c) ein Reaktionsmedium zum Ermöglichen einer reversiblen Elektronentransferreaktion zwischen den Komponenten (a) und (b) über dem Schmelz- oder Erweichungspunkt des Reaktionsmediums (Komponente (c)); und
wobei die thermochrome Beschichtung konfiguriert ist, um die Farbe als Reaktion auf eine Erhöhung der Temperatur der metallischen Abschirmung auf eine erste Temperatur von etwa 60 °C oder mehr reversibel zu ändern und die Farbe als Reaktion auf eine Abnahme der Temperatur der metallischen Abschirmung auf eine zweite Temperatur reversibel zu ändern, die etwa 0 bis etwa 20 °C unterhalb der ersten Temperatur liegt.

## Revendications

1. Briquet à main permettant d'allumer un matériau combustible, comprenant :
un mécanisme d'allumage permettant de générer une source de chaleur ;
un moyen d'actionnement permettant d'activer le mécanisme d'allumage ;
un blindage métallique positionné adjacent au mécanisme d'allumage et à une distance du mécanisme d'allumage de telle sorte que le blindage métallique est chauffé par la source de chaleur lorsque le briquet à main est mis en fonctionnement ; et
un logement comprenant le mécanisme d'allumage, le moyen d'actionnement et le blindage métallique ;
le blindage métallique comprenant un revêtement thermochromique comprenant :
(a) un composé organique donneur d'électrons (composant (a)),
(b) un composé accepteur d'électrons (composant (b)), et
(c) un milieu réactionnel permettant une réaction réversible de transfert d'électrons entre les composants (a) et (b) au-dessus du point de fusion ou de ramollissement du milieu réactionnel (composant (c)) ; et
le revêtement thermochromique étant conçu pour changer de couleur de manière réversible en réponse à une augmentation de la température du blindage métallique jusqu'à une première température d'environ 60 °C ou supérieure et pour changer de couleur de manière réversible en réponse à une diminution de la température du blindage métallique jusqu'à une seconde température qui est d'environ 0 à environ 20 °C en dessous de la première température.

2. Briquet à main selon la revendication 1, dans lequel la source de chaleur est une flamme de gaz et dans lequel le blindage métallique est un pare-vent.

3. Briquet à main selon la revendication 1 ou la revendication 2, dans lequel le revêtement thermochromique comprend des microcapsules à noyau-enveloppe, les microparticules à noyau-enveloppe comprenant un composant de noyau et un composant d'enveloppe, le composant de noyau comprenant le composé organique donneur d'électrons (composant (a)), le composé accepteur d'électrons (composant (b)) et le milieu réactionnel destiné à permettre une réaction réversible de transfert d'électrons entre les composants (a) et (b) au-dessus du point de fusion ou de ramollissement du milieu réactionnel (composant (c)) et le composant d'enveloppe comprenant un polymère organique.

4. Briquet à main selon l'une quelconque des revendications 1 à 3, dans lequel le revêtement thermochromique est conçu pour passer d'un état coloré à un état décoloré en réponse à une augmentation de la température du blindage métallique jusqu'à la première température d'environ 60 °C ou supérieure.

5. Briquet à main selon l'une quelconque des revendications 1 à 4, dans lequel le point de fusion ou de ramollissement du composant (c) demeure sensiblement inchangé après une exposition cyclique du blindage métallique à 10 cycles de chauffage du blindage métallique jusqu'à ce que le blindage métallique ait atteint une température supérieure au point de fusion ou de ramollissement du composant (c) suivi par un refroidissement du blindage métallique jusqu'à une température inférieure au point de fusion ou de ramollissement du composant (c).

6. Briquet à main selon l'une quelconque des revendications 1 à 5, dans lequel le milieu réactionnel destiné à permettre une réaction réversible de transfert d'électrons entre les composants (a) et (b) est un matériau cireux, en particulier une cire, ayant un point de fusion compris entre environ 60 °C et environ 95 °C, spécifiquement entre environ 60 °C et environ 85 °C, et en particulier entre environ 65 °C et environ 80 °C.

7. Briquet à main selon l'une quelconque des revendications 1 à 6, dans lequel le milieu réactionnel destiné à permettre une réaction réversible de transfert d'électrons entre les composants (a) et (b) au-dessus du point de fusion ou de ramollissement du milieu réactionnel (c) est choisi dans le groupe : eicosanol, docosanol, tétracosanol, hexacosanol ; stéarate de stéaryle, arachidate de stéaryle, béhénate de stéaryle, stéarate d'arachidyle, arachidate d'arachidyle, béhénate d'arachidyle, stéarate de béhényle, arachidate de béhényle, béhénate de béhényle, tétrastéarate de pentaérythritol, (dioctadécyl)-3,3'-thiodipropionate ; monolaurate de glycérol, monostéarate de glycérol, dilaurate de glycérol, distéarate de glycérol, dibéhénate de glycérol, tripalmitate de glycérol, tristéarate de glycérol, tribéhénate de glycérol ; cyclododécanone, 4-méthoxybenzophénone, 11-hénicosanone, 10-nonadécanone, n-octadécaophénone, ditridécylcétone, di-n-heptyldécylcétone ; acide palmitique, acide stéarique, acide arachidique, acide béhénique ; n-octacosane, triacontane, tétratriacontane, tétracontane, pentacontane, cire microcristalline, 2,6-diisopropylnaphtalène ; éther n-octadécylique, propionate de triéthylène glycol-bis-3-(3-tert-butyl-4-hydroxy-5-méthylphényle).

8. Briquet à main selon l'une quelconque des revendications 1 à 7, dans lequel le composé organique donneur d'électrons est choisi parmi 3-(4-diéthylamino-2-éthoxyphényl)-3-(1-éthyl-2-méthylindol-3-yl)-4-azaphtalide (Bleu 63, numéro CAS 69898-40-4), 2'-(dibenzylamino)-6'-(diéthylamino)fluorane (numéro CAS 34372-72-0), N,N-diméthyl- 4-[2-[2-(octyloxy)phényl]-6-phényl-4-pyridinyl]benzénamine (jaune CK37, numéro CAS 144190-25-0), 7-(4-diéthylamino-2-hexyloxyphényl)-7-(1-éthyl-2-méthyl-1H-indol-3-yl)-7H-furo[3,4-b]pyridin-5-one (Bleu 203, numéro CAS 98660-18-5), 2-(2,4-diméthylphénylamino)-3-méthyl-6-diéthylaminofluorane (Noir 15, numéro CAS : 36431-22-8), et 3,3-bis-(1-butyl-2-méthyl-indol-3-yl)-3H-isobenzofuran-1-one (Rouge 40, numéro CAS 50292-91-6) et/ou dans lequel le composé accepteur d'électrons est choisi parmi 4,4 -cyclohexylidène bisphénol (Bisphénol Z, numéro CAS 843-55-0), 2,2-bis(4-hydroxy-3-méthylphényl)propane (Bisphénol C, numéro CAS 79-97-0), 4-hexyl-1,3-dihydroxybenzène (4-hexylrésorcinol, numéro CAS 136-77-6), 4,4'-(hexafluoroisopropylidène)diphénol (Bisphénol AF, numéro CAS 1478-61-1), 4, 4 -(1-phényléthylidène)bisphénol (numéro CAS 1571-75-1), 2,2'-dihydroxybiphényle (numéro CAS 1806-29-7), 4,4'-(1,4-phénylènediisopropylidène)bisphénol (numéro CAS 2167-51-3), 1,1-bis(4-hydroxy-3-méthylphényl)cyclohexane (numéro CAS 2362-14- 3), 9,9-bis(4-hydroxyphényl)fluorène (numéro CAS 3236-71-3), 4,4'-(1,3-phénylènediisopropylidène)bisphénol (numéro CAS 13595-25-0), 1,1,1-tris(4-hydroxyphényl)éthane (numéro CAS 27955-94-8), 4,4'-(2-éthylhexylidène)diphénol (numéro CAS 74462-02-5), •,•,•'-tris(4-hydroxyphényl)-1-éthyle-4-isopropylbenzène (numéro CAS 110726-28-8), 3,5,4*-trihydroxy-trans-stilbène (resvératrol, numéro CAS 501-36-0).

9. Briquet à main selon l'une quelconque des revendications 1 à 8, dans lequel le revêtement thermochromique comprend en outre un colorant non thermosensible.

10. Briquet à main selon l'une quelconque des revendications 1 à 9, dans lequel le revêtement thermochromique est conçu pour représenter un ou plusieurs symboles en réponse à une augmentation de la température du blindage métallique jusqu'à la première température d'environ 60 °C ou supérieure.

11. Briquet à main selon l'une quelconque des revendications 1 à 10, dans lequel le revêtement thermochromique est conçu pour représenter un ou plusieurs symboles ou une couleur en réponse à une augmentation de la température du blindage métallique jusqu'à la première température d'environ 60 °C ou supérieure, le ou les symboles ou la couleur étant formés par un colorant non thermosensible ; dans lequel le revêtement thermochromique est conçu pour masquer au moins partiellement le ou les symboles ou la couleur formés par le colorant non thermosensible à la première température du blindage métallique en dessous d'environ 60 °C ; et
dans lequel le revêtement thermochromique est conçu pour passer d'un état coloré à un état décoloré en réponse à une augmentation de la température du blindage métallique jusqu'à la première température d'environ 60 °C ou supérieure.

12. Briquet à main selon la revendication 11, dans lequel le revêtement thermochromique comprend au moins deux couches, une couche interne comprenant le colorant non thermosensible et une couche externe comprenant les composants (a), (b) et (c).

13. Briquet à main selon l'une quelconque des revendications 1 à 12, dans lequel le revêtement thermochromique est imprimé sur le blindage métallique ou dans lequel le revêtement thermochromique est une étiquette qui est apposée sur le blindage métallique avec un adhésif.

14. Procédé de préparation d'un briquet à main permettant d'allumer un matériau combustible selon l'une quelconque des revendications 1 à 13, comprenant l'application d'un revêtement thermochromique sur un blindage métallique.

15. Utilisation d'un revêtement thermochromique en guise d'indicateur d'avertissement de température pour un briquet à main permettant d'allumer un matériau combustible ;
le briquet à main permettant d'allumer un matériau combustible comprenant :
un mécanisme d'allumage permettant de générer une source de chaleur ;
un moyen d'actionnement permettant d'activer le mécanisme d'allumage ;
un blindage métallique positionné adjacent au mécanisme d'allumage et à une distance du mécanisme d'allumage de telle sorte que le blindage métallique est chauffé par la source de chaleur lorsque le briquet à main est mis en fonctionnement ; et
un logement comprenant le mécanisme d'allumage, le moyen d'actionnement et le blindage métallique ; et
le revêtement thermochromique comprenant :
(a) un composé organique donneur d'électrons (composant (a)),
(b) un composé accepteur d'électrons (composant (b)), et
(c) un milieu réactionnel destiné à permettre une réaction réversible de transfert d'électrons entre les composants (a) et (b) au-dessus du point de fusion ou de ramollissement du milieu réactionnel (composant (c)) ; et
le revêtement thermochromique étant conçu pour changer de couleur de manière réversible en réponse à une augmentation de la température du blindage métallique jusqu'à une première température d'environ 60 °C ou supérieure et pour changer de couleur de manière réversible en réponse à une diminution de la température du blindage métallique jusqu'à une seconde température qui est d'environ 0 à environ 20 °C en dessous de la première température.
